# EUROPEAN PATENT APPLICATION

(11) **EP 2 602 068 A1**
(43) Date of publication of application: **12.06.2013**
(21) Application number: 11814352.8
(22) Date of filing: 18.05.2011
(51) Int. Cl.: B25J 11/00, F16H 21/46

(54) **PARALLEL MECHANISM**

(30) Priority: 02.08.2010 JP 2010173524
(71) Applicant: Kabushiki Kaisha Yaskawa Denki, Kitakyushu-shi, Fukuoka 806-0004 (JP)
(72) Inventor: ZHANG Wennong, Kitakyushu-shi Fukuoka 806-0004 (JP); NAKAMURA Hiroshi, Kitakyushu-shi Fukuoka 806-0004 (JP)
(74) Representative: Viering, Jentschura & Partner
(86) International application number: PCT/JP2011/061412
(87) International publication number: WO 2012/017722

(57) **Abstract**

[Object] To provide a parallel mechanism that is driven with at least four degrees of freedom with both high speed and high accuracy ensured.

[Means of Realizing the Object] Four turnable actuators (31 to 34) disposed at a fixed plate (1) drive a movable plate (2) in a completely parallel manner with four degrees of freedom through four peripheral driving mechanisms (41 to 44). The four peripheral driving mechanisms (41 to 44) include upper arms (411, 421, 431, and 441) integral with rotors of the turnable actuators (31 to 34), lower arms (412, 422, 432, and 442) each made up of a parallel linkage, upper joints (413, 423, 433, and 443) coupling an upper arm and a lower arm to one another, and lower joints (414, 424, 434, and 444) coupling the lower arm and the movable plate (2) to one another. The two the lower joints 414 and 434 among the four lower joints are each made up of a turning pair of two degrees of freedom in which two pair axes are orthogonal to one another.

## Description

### [Technical Field]

The present invention relates to a parallel mechanism.

### [Related Art]

In recent years, there have been demands for increase in speed and accuracy in the field of industrial robots, and this has brought utilization of parallel mechanisms into focus. A conventional parallel mechanism is as disclosed in Japanese Translation of PCT International Application Publication No. 2008-529816. In this conventional art, four actuators move a movable platform with three translational degrees of freedom using respective four chains each provided with a parallel linkage, while at the same time rotating a working tool mounted on the movable platform about a vertical axis, resulting in driving of four degrees of freedom.

### [Related Art Documents]

The contents of Japanese Translation of PCT International Application Publication No. 2008-529816 are incorporated herein by reference in their entirety.

### [Summary of the Invention]

### [Problems to be Solved by the Invention]

Unfortunately, in the conventional art, the four chains need to simultaneously generate force for translational motion and torque for rotational motion. For high-speed translational motion of a robot, it is necessary to keep a small amount of torsion between the chains so that as small a torsional torque as possible is applied to the parallel linkage. This necessitates an amplifier to increase the rotational deformation of the movable platform. If the amplifier is devised to be as small a burden as possible on the movable platform, it becomes difficult to increase the output accuracy. That is, the conventional art has met with a problem of difficulty in realizing both high speed and high accuracy.

The present invention has been made in view of the above-described circumstances, and it is an object of the present invention to provide a parallel mechanism that is driven with at least four degrees of freedom with both high speed and high accuracy ensured.

### [Means of Solving the Problems]

According to one aspect of the present invention, a parallel mechanism includes a fixed plate, four turnable actuators, four peripheral driving mechanisms, and a movable plate. The fixed plate has four directions. The four turnable actuators each include a rotor and are disposed in the respective four directions of the fixed plate with pivot axes of two adjacent turnable actuators among the four turnable actuators being orthogonal to one another and with pivot axes of two opposing turnable actuators among the four turnable actuators being parallel to one another. The four peripheral driving mechanisms each include an upper arm, a lower arm, an upper joint, and a lower joint. The upper arm includes a bar integral with the rotor of a turnable actuator among the four turnable actuators corresponding to the upper arm. The upper joint couples the upper arm and the lower arm to one another. The lower joint couples the lower arm and the movable plate to one another. The movable plate has a plane direction and is driven by the four turnable actuators through the four peripheral driving mechanisms with at least four degrees of freedom including one rotational degree of freedom along the plane direction of the movable plate.

### [Effects of the Invention]

The parallel mechanism is driven with at least four degrees of freedom with high speed and high accuracy.

### [Brief Description of the Drawings]

FIG. 1 is a schematic diagram illustrating a general configuration of a parallel mechanism according to a first embodiment.
FIG. 2 is a schematic diagram illustrating a general configuration of a parallel mechanism according to a modification of the first embodiment.
FIG. 3 is a schematic diagram illustrating a general configuration of a parallel mechanism according to another modification of the first embodiment.
FIG. 4 is a schematic diagram illustrating a general configuration of a parallel mechanism according to still another modification of the first embodiment.
FIG. 5 is a schematic diagram illustrating a general configuration of a parallel mechanism according to still another modification of the first embodiment.
FIG. 6 is a schematic diagram illustrating a general configuration of a parallel mechanism according to a second embodiment.
FIG. 7 is a schematic diagram illustrating a general configuration of a parallel mechanism according to a modification of the second embodiment.
FIG. 8 is a schematic diagram illustrating a general configuration of a parallel mechanism according to another modification of the second embodiment.
FIG. 9 is a schematic diagram illustrating a general configuration of a parallel mechanism according to still another modification of the second embodiment.
FIG. 10 is a schematic diagram illustrating a general configuration of a parallel mechanism according to still another modification of the second embodiment.
FIG. 11 is a schematic diagram illustrating a general configuration of a parallel mechanism according to still another modification of the second embodiment.
FIG. 12 is a schematic diagram illustrating a general configuration of a parallel mechanism according to a third embodiment.
FIG. 13 is a schematic diagram illustrating a general configuration of a parallel mechanism according to a modification of the third embodiment.
FIG. 14 is a schematic diagram illustrating a partial configuration of a parallel mechanism according to another modification of the third embodiment.
FIG. 15 is a schematic diagram illustrating a partial configuration of a parallel mechanism according to a fourth embodiment.
FIG. 16 is a longitudinal sectional view of a wrist mechanism of the parallel mechanism according to the fourth embodiment, illustrating the structure of the wrist mechanism in detail.

### [Modes for Carrying out the Invention]

### <First embodiment>

A first embodiment will be described by referring to the accompanying drawings. This embodiment is directed to a parallel mechanism 100 driven with four degrees of freedom.

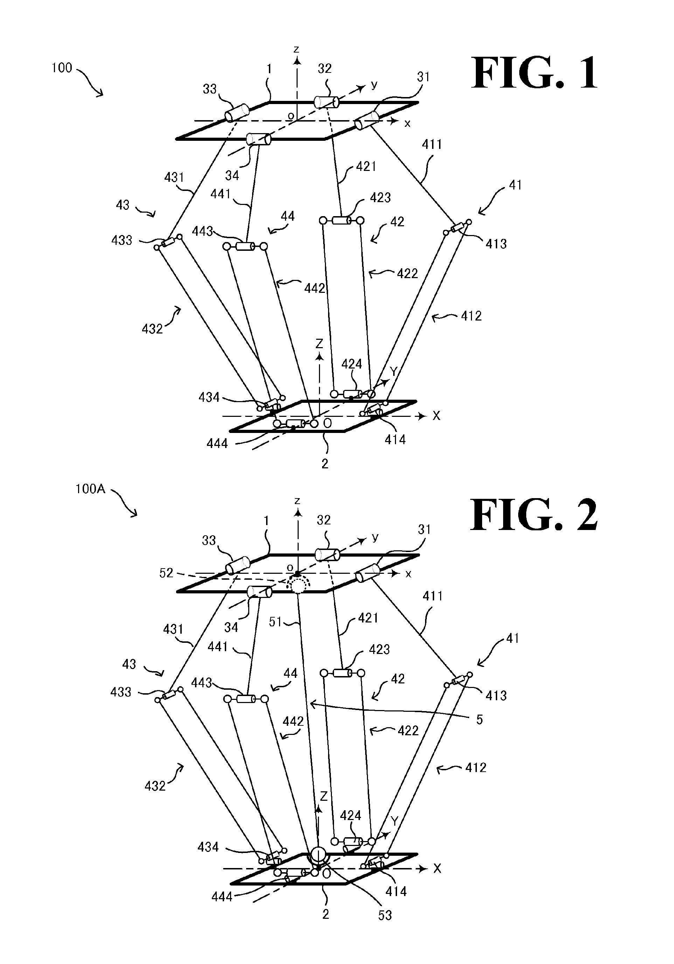

As shown in FIG. 1, the parallel mechanism 100 according to this embodiment includes a fixed plate 1, four turnable actuators 31, 32, 33, and 34, four peripheral driving mechanisms 41, 42, 43, and 44, and a movable plate 2. For ease of description of the arrangement and the like of the mechanisms, the following description will refer to absolute coordinates (xyzo) and relative coordinates (XYZO). The absolute coordinates (xyzo) have an xoy plane that has an origin o at the center of the fixed plate 1 and that is parallel to the fixed plate 1. The relative coordinates (XYZO) have an XOY plane that has an origin O at the center of the movable plate 2 and that is parallel to the movable plate 2.

The turnable actuators 31 and 33 form a symmetry relative to the absolute coordinate origin o and are disposed on the x axis with the respective rotation axes parallel to the y axis. The turnable actuators 32 and 34 form a symmetry relative to the absolute coordinate origin o and are disposed on the y axis with the respective rotation axes parallel to the x axis.

The peripheral driving mechanisms 41 to 44 respectively include upper arms 411, 421, 431, and 441, lower arms 412, 422, 432, and 442, upper joints 413, 423, 433, and 443, and lower joints 414, 424, 434, and 444. The upper joints 413, 423, 433, and 443 respectively couple the upper arms 411, 421, 431, and 441 to the lower arms 412, 422, 432, and 442. The lower joints 414, 424, 434, and 444 respectively couple the lower arms 412, 422, 432, and 442 to the movable plate 2. The upper arms 411, 421, 431, and 441 are each made up of a single bar integral with the rotor of the corresponding one of the turnable actuators 31, 32, 33, and 34, and swing on a plane orthogonal to the xoy plane. In contrast, the lower arms 412, 422, 432, and 442 are each made up of a parallel linkage of four links. Two parallel links among the four links are coupled to one another by turning pairs. In the following description, among the four links constituting the parallel linkage, the link coupled to the upper joint will be referred to as an upper link, while the link coupled to the lower joint will be referred to as a lower link.

All the upper joints 413, 423, 433, and 443 are turning pairs each having a pair axis that is parallel to the upper link of the corresponding parallel linkage and to the rotation axis of the corresponding one of the turnable actuators 31, 32, 33, and 34. The lower joints 424 and 444 are each made up of a turning pair having a pair axis that is parallel to the lower link of the corresponding one of the parallel linkages 422 and 442 and to the X axis. In contrast, the lower joints 414 and 434 are each made up of a turning pair of two degrees of freedom (for example, a universal joint) each having two pair axes orthogonal to one another. Among the two pair axes, the pair axis on the side of the parallel linkage is parallel to the lower link of the corresponding one of the parallel linkages 412 and 432. The pair axis on the side of the movable plate of the lower joint 414 and the pair axis on the side of the movable plate of the lower joint 434 are both on the X axis (or a line parallel to the X axis).

Operation principles of the parallel mechanism 100 will be described below. If the lower joints 414 and 434 respectively of the peripheral driving mechanisms 41 and 43 each had a turning pair of one degree of freedom similarly to the lower joints 424 and 444 respectively of the peripheral driving mechanisms 42 and 44, then the pair axes of the upper joints of all the peripheral driving mechanisms 41 to 44 would be parallel to the upper link of the corresponding parallel linkage and to the rotation axis of the corresponding one of the turnable actuators 31 to 34. This disables the movable plate 2 to change its posture, while enabling translational motion of only as low as three degrees of freedom. However, the lower joints 414 and 434 respectively of the peripheral driving mechanisms 41 and 43 are each made up of a turning pair of two degrees of freedom, and the pair axes on the side of the movable plate of these two lower joints 414 and 434 are both on the X axis. This enables the movable plate 2 to make translational motion and, in addition, make rotational motion about the X axis, which is an axis along a plane direction of the movable plate 2. Therefore, controlling the four turnable actuators 31 to 34 enables the movable plate 2 to be driven uniquely with four degrees of freedom, that is, three translational degrees of freedom and one rotational degree of freedom about the X axis. Additionally, the movable plate 2 does not rotate about the Z axis, and this eliminates the need for generating torsional torque in the longitudinal direction of the parallel linkage, and minimizes the amount of torsion in the longitudinal direction of the parallel linkage, which has a significant influence on accuracy. Further, there is no need for an amplifier, which is burdensome to the movable plate as in the above-described conventional art.

Thus, the use of the parallel mechanism 100 according to this embodiment enables the movable plate 2 to be driven in a completely parallel manner without generating torsional torque in the longitudinal direction of the parallel linkage, and realizes a parallel mechanism that is driven with four degrees of freedom with both high speed and high accuracy ensured. It is noted that the rotation of the movable plate 2 about the Y axis and about the Z axis can be restricted by the peripheral driving mechanism 42 and the peripheral driving mechanism 44, and hence at least one of the lower joint 414 of the peripheral driving mechanism 41 and the lower joint 434 of the peripheral driving mechanism 43 may be a ball joint.

It should be noted that the first embodiment should not be construed in a limiting sense, and various modifications are possible without departing from the technical scope of the present invention. Modifications will be described below.

### (1-1) Case where all the lower joints are made up of turning pairs of two degrees of freedom

As shown in FIG. 2, in a parallel mechanism 100A according to this modification, the lower joints 424 and 444 respectively of the peripheral driving mechanisms 42 and 44 according to the first embodiment are each changed from a one-axis turning pair to a turning pair of two degrees of freedom. Also, the center of the fixed plate 1 and the center of the movable plate 2 are coupled to one another by a constraint mechanism 5.

Referring to FIG. 2, the lower joints 424 and 444 are each a turning pair of two degrees of freedom with two pair axes orthogonal to one another. Among the two pair axes, the pair axis on the side of the parallel linkage is parallel to the lower link of the corresponding one of the parallel linkages 422 and 442. The pair axis of the lower joint 424 on the side of the movable plate and the pair axis of the lower joint 444 on the side of the movable plate are both on the Y axis (or a line parallel to the Y axis). The constraint mechanism 5 is made up of a center rod 51, an upper center joint 52, and a lower center joint 53. The center rod 51 is made up of a single bar. The upper center joint 52 couples the center rod 51 to a center point o of the fixed plate 1. The lower center joint 53 couples the center rod 51 to a center point O of the movable plate 2. The upper center joint 52 and the lower center joint 53 are each a ball joint.

The lower joints 424 and 444 are each a turning pair of two degrees of freedom with both the pair axis of the lower joint 424 on the side of the movable plate and the pair axis of the lower joint 444 on the side of the movable plate being on the Y axis. This makes the movable plate 2 rotatable about the Y axis. In contrast, the center o of the fixed plate 1 and the center O of the movable plate 2 are coupled to one another by the constraint mechanism 5. This makes the center O of the movable plate 2 displaceable only with two degrees of freedom (rotational degrees of freedom about the x axis and the y axis) on a spherical surface with the center o of the fixed plate 1 as the center. Thus, the movable plate 2 is displaceable with four rotational degrees of freedom about the x axis and the y axis, and about the X axis and the Y axis, which are along plane directions of the movable plate 2.

In this modification as compared with the first embodiment, even though the translational motion of the movable plate 2 is restricted, various kinds of rotational motion are ensured. Additionally, the rotation of the movable plate 2 about the Z axis can be restricted by only one of the four peripheral driving mechanisms 41 to 44. In view of this, at least one of the lower joints of the other three peripheral driving mechanisms may be a ball joint.

### (1-2) Case where the upper and lower joints of two peripheral driving mechanisms are made up of ball joints

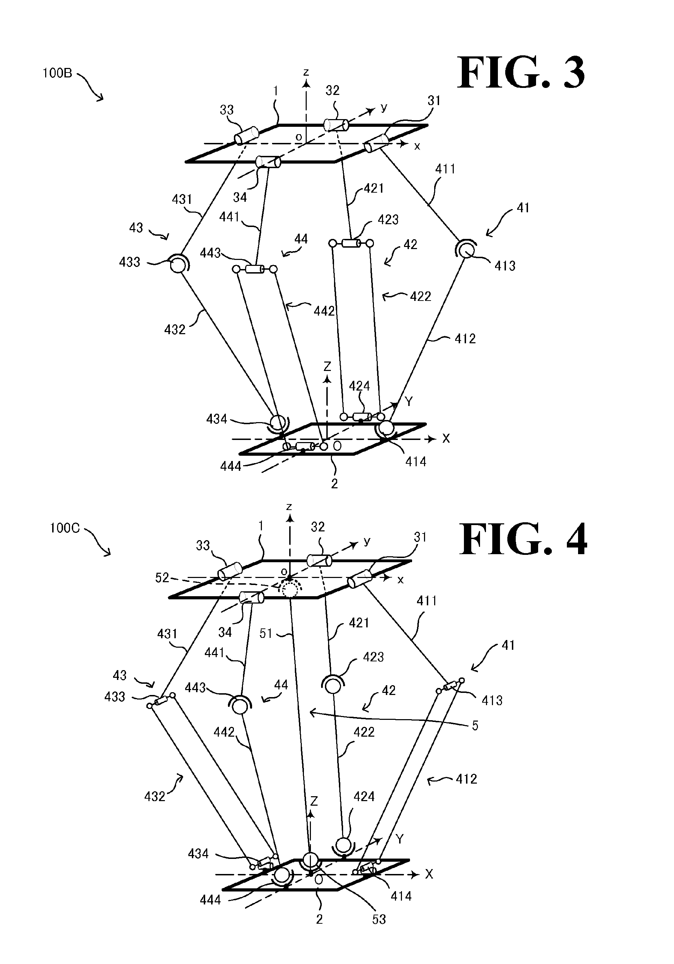

As shown in FIG. 3, in a parallel mechanism 100B according to this modification, the lower arms 412 and 432 respectively of the peripheral driving mechanisms 41 and 43 according to the first embodiment are each changed from a parallel linkage to a single bar. Also, the upper joints 413 and 433 and the lower joints 414 and 434 respectively of the peripheral driving mechanisms 41 and 43 are all changed to ball joints.

The upper joints 423 and 443 of the peripheral driving mechanisms 42 and 44 have their respective pair axes disposed parallel to the upper link of the corresponding one of the parallel linkages 422 and 442 and to the rotation axis of the corresponding one of the turnable actuators 32 and 34. The pair axes of the lower joints 424 and 444 are respectively parallel to the lower links of the parallel linkages 422 and 442 and to the X axis. The rotation axes of the turnable actuators 32 and 34 are parallel to the x axis. Thus, the movable plate 2 is held with the X axis at any time parallel to the x axis. In contrast, the upper joints 413 and 433 and the lower joints 414 and 434 respectively of the peripheral driving mechanisms 41 and 43 are all ball joints, and therefore put no restriction on the degrees of freedom of the movable plate 2. Thus, similarly to the first embodiment, by drivingly controlling the four turnable actuators 31 to 34, the movable plate 2 is displaceable with four degrees of freedom, that is, three translational degrees of freedom and one rotational degree of freedom about the X axis, which is along a plane direction of the movable plate 2.

In this modification as compared with the first embodiment, even though the use of ball joints diminishes the movable range, a simpler mechanism is ensured by making each of the lower arms 412 and 432 a single bar. Additionally, any one of the upper joint 413 and the lower joint 414 of the peripheral driving mechanism 41 may be a universal joint. Similarly, any one of the upper joint 433 and the lower joint 434 of the peripheral driving mechanism 43 may be a universal joint.

### (1-3) Case where ball joints are used for two peripheral driving mechanisms with the fixed and movable plates coupled to one another

As shown in FIG. 4, in a parallel mechanism 100C according to this modification, the lower arms 422 and 442 respectively of the peripheral driving mechanisms 42 and 44 according to the first embodiment are each changed from a parallel linkage to a single bar. Also, the upper joints 423 and 443 and the lower joints 424 and 444 respectively of the peripheral driving mechanisms 42 and 44 are all changed to ball joints. The center of the fixed plate 1 and the center of the movable plate 2 are coupled to one another by the constraint mechanism 5.

Referring to FIG. 4, the constraint mechanism 5 is made up of a center rod 51, an upper center joint 52, and a lower center joint 53. The center rod 51 is made up of a single bar. The upper center joint 52 couples the center rod 51 to a center point o of the fixed plate 1. The lower center joint 53 couples the center rod 51 to a center point O of the movable plate 2. The upper center joint 52 and the lower center joint 53 are both ball joints.

In this modification as compared with the first embodiment, the upper joints 423 and 443 and the lower joints 424 and 444 respectively of the peripheral driving mechanisms 42 and 44 are all ball joints. Even though this releases the restriction on the rotation of the movable plate 2 about the Y axis, in compensation, the center o of the fixed plate 1 and the center O of the movable plate 2 are coupled to one another by the constraint mechanism 5. This makes the center O of the movable plate 2 displaceable only with two degrees of freedom (rotational degrees of freedom about the x axis and the y axis) on a spherical surface with the center o of the fixed plate 1 as the center. Thus, similarly to modification (1-1) described above, the movable plate 2 is displaceable with four rotational degrees of freedom about the x axis and the y axis, and about the X axis and the Y axis, which are along plane directions of the movable plate 2.

With the use of the technique according to this modification as compared with modification (1-1) described above, even though the use of ball joints diminishes the movable range, a simpler mechanism is ensured by making each of the lower arms 422 and 442 a single bar. Additionally, any one of the upper joint 423 and the lower joint 424 of the peripheral driving mechanism 42 may be a universal joint. Similarly, any one of the upper joint 443 and the lower joint 444 of the peripheral driving mechanism 44 may be a universal joint.

### (1-4) Case where ball joints are used for all the peripheral driving mechanisms with the fixed and movable plates coupled to one another

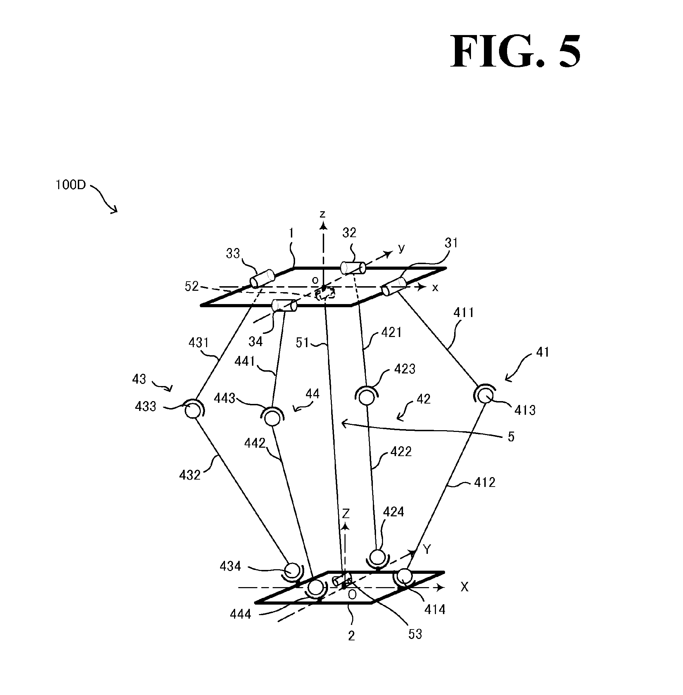

As shown in FIG. 5, in a parallel mechanism 100D according to this modification, the lower arms 412 and 432 respectively of the peripheral driving mechanisms 41 and 43 according to modification (1-3) described above are each changed from a parallel linkage to a single bar. Also, the upper joints 413 and 433 and the lower joints 414 and 434 respectively of the peripheral driving mechanisms 41 and 43 are all changed to ball joints. The upper center joint 52 and the lower center joint 53 of the constraint mechanism 5 are both universal joints.

The upper joints and the lower joints of the peripheral driving mechanisms 41 to 44 are all made up of ball joints, and therefore put no restriction on the degrees of freedom of the movable plate 2. However, the upper center joint 52 and the lower center joint 53 of the constraint mechanism 5 are both universal joints. This restricts rotation about the axis orthogonal to the two pair axes of each universal joint, that is, rotation about the Z axis. Specifically, the movable plate 2 is displaceable with four rotational degrees of freedom relative to the two pair axes of the upper center joint 52 and to the two pair axes of the lower center joint 53 (that is, relative to the X axis and the Y axis, which are along plane directions of the movable plate 2).

In this modification as compared with modification (1-1) described above, even though the use of ball joints diminishes the movable range, a simpler mechanism is ensured by making each of the lower arms 412 to 442 a single bar. Additionally, any one of the upper joint and the lower joint of each of the peripheral driving mechanisms 41 to 44 may be a universal joint.

### <Second embodiment>

Next, a second embodiment will be described by referring to the accompanying drawings. This embodiment is directed to a parallel mechanism 1000 driven with six degrees of freedom (five degrees of freedom for driving of the movable plate and one degree of freedom for driving of the end effector).

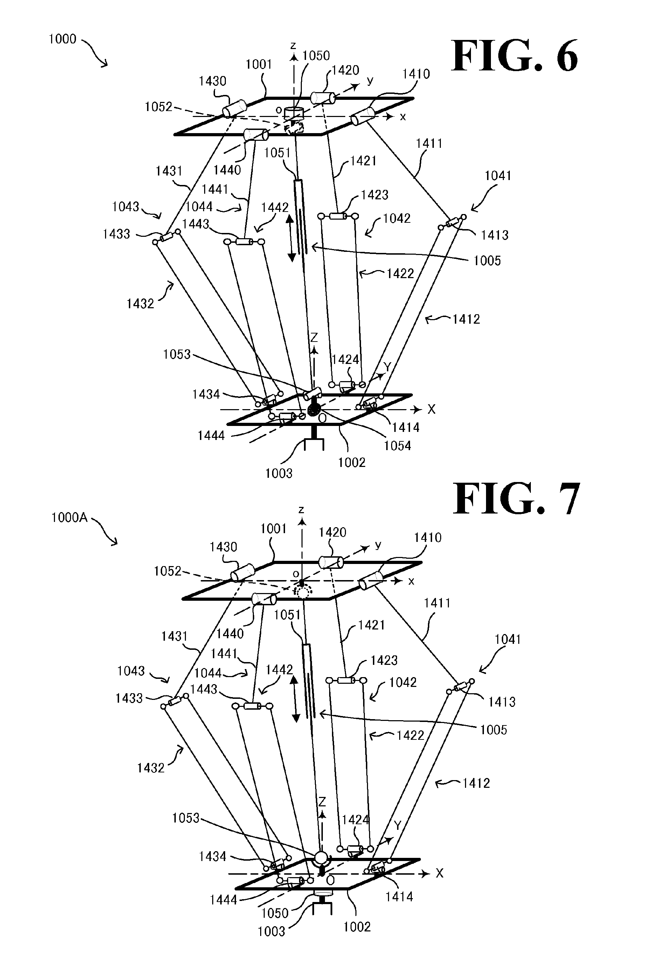

As shown in FIG. 6, the parallel mechanism 1000 according to this embodiment includes a fixed plate 1001, four peripheral driving mechanisms 1041 to 1044, a center drive mechanism 1005, a movable plate 1002, and an end effector 1003. In this embodiment, similarly to the first embodiment described above, for ease of description of the arrangement and the like of the mechanisms, the following description will refer to absolute coordinates (xyzo) and relative coordinates (XYZO). The absolute coordinates (xyzo) have an xoy plane that has an origin o at the center of the fixed plate 1001 and that is parallel to the fixed plate 1001. The relative coordinates (XYZO) have an XOY plane that has an origin O at the center of the movable plate 1002 and that is parallel to the movable plate 1002.

The peripheral driving mechanisms 1041 to 1044 respectively include turnable actuators 1410 to 1440, upper arms 1411 to 1441, lower arms 1412 to 1442, upper joints 1413 to 1443, and lower joints 1414 to 1444. The upper joints 1413 to 1443 respectively couple the upper arms 1411 to 1441 to the lower arms 1412 to 1442. The lower joints 1414 to 1444 respectively couple the lower arms 1412 to 1442 to the movable plate 1002. The turnable actuators 1410 and 1430 form a symmetry relative to the absolute coordinate origin o and are disposed on the x axis with the respective rotation axes parallel to the y axis. The turnable actuators 1420 and 1440 form a symmetry relative to the absolute coordinate origin o and are disposed on the y axis with the respective rotation axes parallel to the x axis. The upper arms 1411, 1421, 1431, and 1441 are each made up of a single bar that is integral with the rotor of the corresponding one of the turnable actuators 1410 to 1440, and swing on a plane orthogonal to the xoy plane. In contrast, the lower arms 1412, 1422, 1432, and 1442 are each made up of a parallel linkage of four links. Two parallel links among the four links are coupled to one another by turning pairs.

All the upper joints 1413, 1423, 1433, and 1443 are turning pairs each having a pair axis that is parallel to the upper link of the corresponding parallel linkage and to the rotation axis of the corresponding one of the turnable actuators 1410 to 1440. The lower joints 1414, 1424, 1434, and 1444 are each made up of a turning pair of two degrees of freedom (for example, a universal joint) having two pair axes orthogonal to one another. Among the two pair axes, the pair axis on the side of the parallel linkage is parallel to the lower link of the parallel linkage. The two pair axes of the lower joint 1424 and the lower joint 1444 on the side of the movable plate are on the X axis (or a line parallel to the X axis). The two pair axes of the lower joint 1414 and the lower joint 1434 on the side of the movable plate are on the Y axis (or a line parallel to the Y axis).

The center drive mechanism 1005 includes a turnable actuator 1050, a linear motion actuator 1051, an upper center joint 1052, a lower center joint 1053, and a bearing 1054. The turnable actuator 1050 is disposed at the center of the fixed plate 1001 with the rotation axis of the turnable actuator 1050 orthogonal to a plane direction of the fixed plate 1001. In contrast, the linear motion actuator 1051 is coupled to a needle of the turnable actuator 1050 through the upper center joint 1052, which is a turning pair of two degrees of freedom. The end effector 1003 is held at the center of the movable plate 1002 by the bearing 1054 in a rotatable manner only about the Z axis, and is coupled to the linear motion actuator 1051 through the lower center joint 1053, which is a turning pair of two degrees of freedom.

Operation principles of the parallel mechanism 1000 will be described below. If the pair axes of all the lower joints 1414 to 1444 respectively of the peripheral driving mechanisms 1041 to 1044 were each made up of a turning pair of one degree of freedom with its pair axis parallel to the lower link of the corresponding parallel linkage, the pair axes of all the upper joints 1413 to 1443 of the peripheral driving mechanisms 1041 to 1044 would be parallel to the upper link of the corresponding parallel linkage and to the rotation axis of the corresponding one of the turnable actuators 1410 to 1440. This disables the movable plate 1002 to change its posture, while enabling translational motion of only as low as three degrees of freedom. However, all the lower joints 1414 to 1444 of the peripheral driving mechanisms 1041 to 1044 are each made up of a turning pair of two degrees of freedom, and the pair axes of two opposing lower joints on the side of the movable plate are on the X axis or the Y axis. This enables the movable plate 1002 to make translational motion and, in addition, make rotational motion about the X axis and the Y axis. That is, rotation of the movable plate 1002 is restricted only about the Z axis. The linear motion actuator 1051 is controlled to determine the distance between the centers of the fixed plate 1001 and the movable plate 1002. Thus, by controlling the four turnable actuators 1410 to 1440 and the single linear motion actuator 1051, the movable plate 1002 can be driven uniquely with five degrees of freedom, that is, three translational degrees of freedom and two rotational degrees of freedom about the X axis and the Y axis, which are along plane directions of the movable plate 1002.

The end effector 1003 is held on the movable plate 1002 by the bearing 1054 and is drivingly rotatable only about the Z axis. The rotation about the Z axis is uniquely determined by controlling the turnable actuator 1050. Thus, the four turnable actuators 1410 to 1440, the linear motion actuator 1051, and the turnable actuator 1050 are controlled to enable the end effector 1003 to be driven uniquely with six degrees of freedom.

Thus, the use of the parallel mechanism 1000 according to this embodiment enables the movable plate 1002 to be driven in a completely parallel manner without generating torsional torque in the longitudinal direction of the parallel linkage, and realizes a parallel mechanism that is driven with five degrees of freedom (six degrees of freedom for driving of the end effector 1003) with both high speed and high accuracy ensured.

Additionally, the four turnable actuators 1410 to 1440 and the turnable actuator 1050 are parallel to each other, which reduces weight of the parallel mechanism 1000. Even though the linear motion actuator 1051 is in series with the other five actuators 1410 to 1440 and 1050, locating the center of gravity as close to the fixed plate 1001 as possible reduces the burden on the four turnable actuators 1410 to 1440. In contrast, the turnable actuator 1050 does not turn the movable plate 1002 and directly drives the end effector 1003. Thus, the turnable actuator 1050 is under light load in the first place, and even a combination of this load and the load of the linear motion actuator 1051 is no hindrance to high speed driving. Additionally, the rotation of the end effector 1003 about the Z axis is independently driven at any rotation rate by the turnable actuator 1050. A rotatable range of approximately ±180° is realized both about the X axis and the Y axis. It is noted that since all kinds of driving are of parallel or orthogonal nature, the driving accuracies of the actuators 1410 to 1440, 1050, and 1051 can be averaged or each of the driving accuracies can be isolated. This results in higher accuracy as compared with serial mechanisms in which the driving accuracies of the actuators are multiplied. Thus, the parallel mechanism 1000 ensures a wide movable range, high speed, and high accuracy at the same time.

It should be noted that the second embodiment should not be construed in a limiting sense, and various modifications are possible without departing from the technical scope of the present invention. Modifications will be described below.

### (2-1) Case where the turnable actuator is disposed on the movable plate

As shown in FIG. 7, in a parallel mechanism 1000A according to this modification, the upper center joint 1052 and the lower center joint 1053 of the center drive mechanism 1005 according to the second embodiment are changed, and the turnable actuator 1050 is disposed on the movable plate 1002.

The center drive mechanism 1005 includes the turnable actuator 1050, the linear motion actuator 1051, the upper center joint 1052, and the lower center joint 1053. The turnable actuator 1050 is disposed on the lower surface of the movable plate 1002 with the rotation axis of the turnable actuator 1050 orthogonal to a plane direction of the movable plate 1002. In contrast, the linear motion actuator 1051 has its upper end coupled to the center of the fixed plate 1001 through the upper center joint 1052, which is a ball joint, and has the lower end coupled to the center of the movable plate 1002 through the lower center joint 1053, which is a ball joint. The end effector 1003 is directly coupled to a needle of the turnable actuator 1050. It is noted that any one of the upper center joint 1052 and the lower center joint 1053 may be a universal joint.

In this modification as compared with the second embodiment, the turnable actuator 1050 is disposed on the movable plate 1002 and thus the four turnable actuators 1410 to 1440 and the linear motion actuator 1051 are under heavier load. Even though this reduces the acceleration of the movable plate 1002's translational motion and rotational motion about the X axis and the Y axis, since the end effector 1003 is directly coupled to the turnable actuator 1050, the rotational acceleration about the Z axis and accuracy improve.

### (2-2) Case where the upper and lower joints of two peripheral driving mechanisms are made up of ball joints

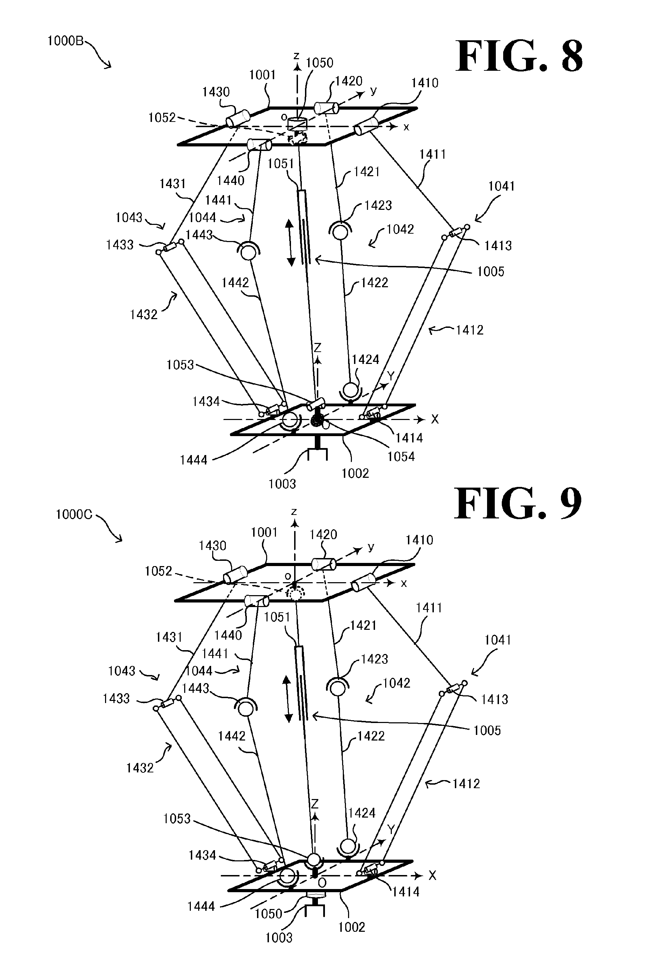

As shown in FIG. 8, in a parallel mechanism 1000B according to this modification, the lower arms 1422 and 1442 respectively of the peripheral driving mechanisms 1042 and 1044 according to the second embodiment are each changed from a parallel linkage to a single bar. Also, the upper joints 1423 and 1443 and the lower joints 1424 and 1444 respectively of the peripheral driving mechanisms 1042 and 1044 are all changed to ball joints.

If the lower joint 1414 of the peripheral driving mechanism 1041 and the lower joint 1434 of the peripheral driving mechanism 1043 were each made up of a turning pair of one degree of freedom with its pair axis parallel to the lower link of the corresponding parallel linkage, the movable plate 1002 would be held with the Y axis at any time parallel to the y axis. That is, the rotational motion of the movable plate 1002 is restricted to two degrees of freedom about the X axis and the Z axis. However, the lower joint 1414 of the peripheral driving mechanism 1041 and the lower joint 1434 of the peripheral driving mechanism 1043 are each made up of a turning pair of two degrees of freedom with the pair axis on the side of the movable plate being disposed on the X axis. This releases the restricted rotation of the movable plate 1002 about the X axis. In contrast, the upper joints 1423 and 1443 and the lower joints 1424 and 1444 respectively of the peripheral driving mechanisms 1042 and 1044 are all ball joints, and therefore put no restriction on the degrees of freedom of the movable plate 1002. Thus, similarly to the second embodiment, by controlling the four turnable actuators 1410 to 1440 and the linear motion actuator 1051, the movable plate 1002 can be driven uniquely with five degrees of freedom, that is, three translational degrees of freedom and two rotational degrees of freedom about the X axis and the Y axis. Accordingly, by controlling the four turnable actuators 1410 to 1440, the linear motion actuator 1051, and the turnable actuator 1050, the end effector 1003 can be driven uniquely with six degrees of freedom.

In this modification as compared with the second embodiment, even though the use of ball joints diminishes the movable range, a simpler mechanism is ensured by making each of the lower arms 1422 and 1442 a single bar. It is noted that any one of the upper joint 1423 and the lower joint 1424 of the peripheral driving mechanism 1042 may be a universal joint. Similarly, any one of the upper joint 1443 and the lower joint 1444 of the peripheral driving mechanism 1044 may be a universal joint.

### (2-3) Case where the turnable actuator is disposed on the movable plate and ball joints are used for two peripheral driving mechanisms

As shown in FIG. 9, in a parallel mechanism 1000C according to this modification, the upper center joint 1052 and the lower center joint 1053 of the center drive mechanism 1005 according to modification (2-2) described above are changed.

The center drive mechanism 1005 includes the turnable actuator 1050, the linear motion actuator 1051, the upper center joint 1052, and the lower center joint 1053. The turnable actuator 1050 is disposed on the lower surface of the movable plate 1002 with the rotation axis of the turnable actuator 1050 orthogonal to a plane direction of the movable plate 1002. In contrast, the linear motion actuator 1051 has its upper end coupled to the center of the fixed plate 1001 through the upper center joint 1052, which is a ball joint, and has the lower end coupled to the center of the movable plate 1002 through the lower center joint 1053, which is a ball joint. The end effector 1003 is directly coupled to a needle of the turnable actuator 1050. It is noted that any one of the upper center joint 1052 and the lower center joint 1053 may be a universal joint.

In the parallel mechanism 1000C according to this modification as compared with modification (2-2) described above, the turnable actuator 1050 is disposed on the movable plate 1002 and thus the four turnable actuators 1410 to 1440 and the linear motion actuator 1051 are under heavier load. Even though this reduces the acceleration of the movable plate 1002's translational motion and rotational motion about the X axis and the Y axis, since the end effector 1003 is directly coupled to the turnable actuator 1050, the rotational acceleration about the Z axis and accuracy improve.

### (2-4) Case where ball joints are used for all the peripheral driving mechanisms

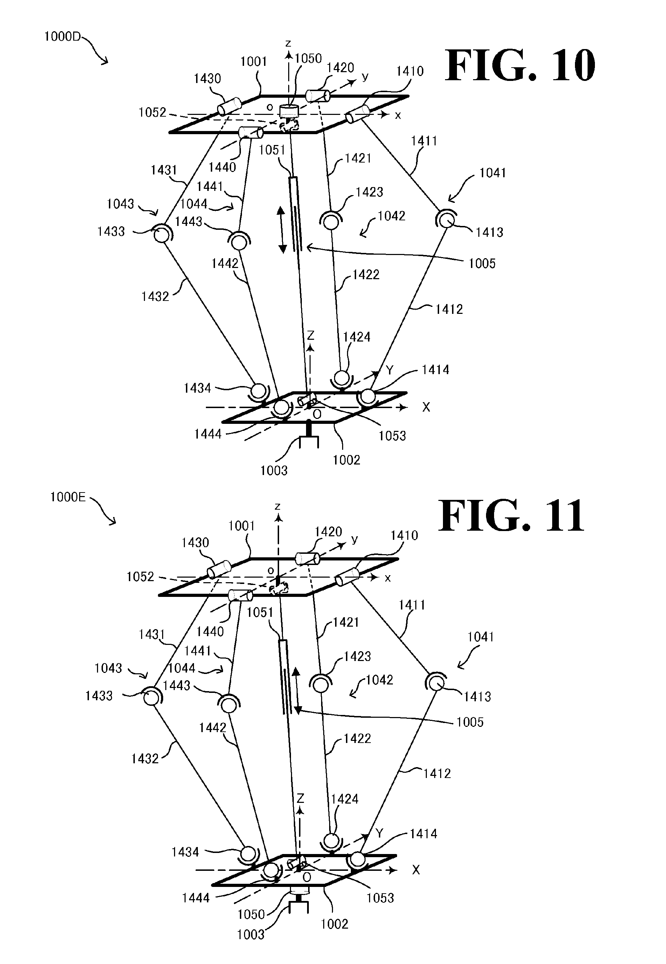

As shown in FIG. 10, in a parallel mechanism 1000D according to this modification, all the lower arms 1412 to 1442 respectively of the four peripheral driving mechanisms 1041 to 1044 according to the second embodiment are each changed from a parallel linkage to a single bar. Also, the upper joints 1413 to 1443 and the lower joints 1414 to 1444 are all changed to ball joints, and the center drive mechanism 1005 is changed.

The center drive mechanism 1005 includes the turnable actuator 1050, the linear motion actuator 1051, the upper center joint 1052, and the lower center joint 1053. The turnable actuator 1050 is disposed at the center of the fixed plate 1001 with the rotation axis of the turnable actuator 1050 orthogonal to a plane direction of the fixed plate 1001. In contrast, the linear motion actuator 1051 has its upper end coupled to a needle of the turnable actuator 1050 through the upper center joint 1052, which is a turning pair of two degrees of freedom, and has the lower end coupled to the center of the movable plate 1002 through the lower center joint 1053, which is a turning pair of two degrees of freedom. The end effector 1003 is disposed directly on the lower surface of the movable plate 1002.

The upper joints 1413 to 1443 and the lower joints 1414 to 1444 respectively of the peripheral driving mechanisms 1041 to 1044 are all made up of ball joints. Even though this puts no restriction on the degrees of freedom of the movable plate 1002, in compensation, the upper center joint 1052 and the lower center joint 1053 of the center drive mechanism 1005, each of which is a universal joint, hold the movable plate 1002 in a rotatable manner about the two pair axes of each universal joint.

In this modification as compared with the second embodiment described above, even though the use of ball joints for the upper joints 1413 to 1443 and the lower joints 1414 to 1444 respectively of the peripheral driving mechanisms 1041 to 1044 diminishes the movable range of the translational motion, a simpler mechanism is ensured by making each of the lower arms 1412 to 1442 a single bar. It is noted that any one of the upper joint and the lower joint of each of the peripheral driving mechanisms 1041 to 1044 may be a universal joint.

### (2-5) Case where the turnable actuator is disposed on the movable plate and ball joints are used for all the peripheral driving mechanisms

As shown in FIG. 11, in a parallel mechanism 1000E according to this modification, the turnable actuator 1050 according to modification (2-4) described above is disposed on the movable plate 1002.

The turnable actuator 1050 is disposed on the lower surface of the movable plate 1002 with the rotation axis of the turnable actuator 1050 orthogonal to a plane direction of the movable plate 1002. In contrast, the linear motion actuator 1051 has its upper end coupled to the center of the fixed plate 1001 through the upper center joint 1052, which is a turning pair of two degrees of freedom, and the lower end coupled to the center of the movable plate 1002 through the lower center joint 1053, which is a turning pair of two degrees of freedom. The end effector 1003 is directly coupled to a needle of the turnable actuator 1050. It is noted that any one of the upper center joint 1052 and the lower center joint 1053 may be a universal joint.

In this modification as compared with modification (2-4) described above, the turnable actuator 1050 is disposed on the movable plate 1002 and thus the four turnable actuators 1410 to 1440 and the linear motion actuator 1051 are under heavier load. Even though this reduces the acceleration of the movable plate 1002's translational motion and rotational motion about the X axis and the Y axis, since the end effector 1003 is directly coupled to the turnable actuator 1050, the rotational acceleration about the Z axis and accuracy improve. It is noted that any one of the upper joint and the lower joint of each of the peripheral driving mechanisms 1041 to 1044 may be a universal joint.

### <Third embodiment>

Next, a third embodiment will be described by referring to the accompanying drawings. This embodiment is directed to a parallel mechanism 2000 driven with six degrees of freedom (four degrees of freedom drive for driving of the movable plate and two degrees of freedom for driving of the end effector).

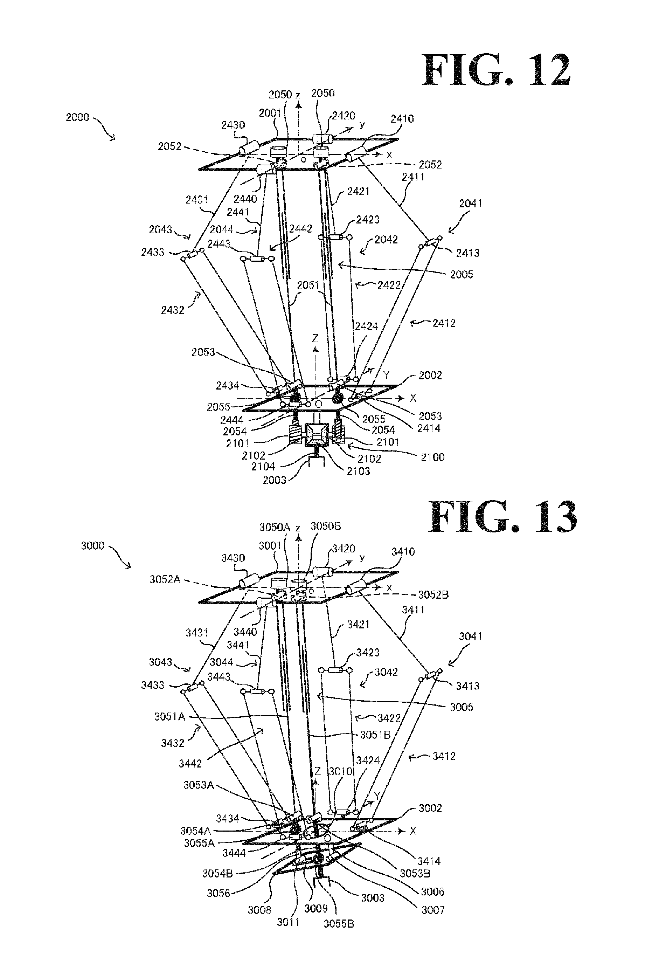

As shown in FIG. 12, the parallel mechanism 2000 according to this embodiment includes a fixed plate 2001, four peripheral driving mechanisms 2041 to 2044, a center drive mechanism 2005, a movable plate 2002, a differential mechanism 2100, and an end effector 2003. The end effector 2003 is disposed below the movable plate 2002 in a rotatable manner about a first rotation axis 2104. In this embodiment as well, the following description will refer to absolute coordinates (xyzo) and relative coordinates (XYZO). The absolute coordinates (xyzo) have an xoy plane that has an origin o at the center of the fixed plate 2001 and that is parallel to the fixed plate 2001. The relative coordinates (XYZO) have an XOY plane that has an origin O at the center of the movable plate 2002 and that is parallel to the movable plate 2002.

The configuration of the peripheral driving mechanisms 2041 to 2044 is basically similar to the configuration of the corresponding ones of the parallel mechanisms 100 and 1000 described above. Still, in this embodiment, the lower joints 2424 and 2444 respectively of the peripheral driving mechanisms 2042 and 2044, which are opposed to one another in the Y axis direction, are each made up of a turning pair of two degrees of freedom with two pair axes orthogonal to one another (for example, a universal joint). Also, the lower joints 2414 and 2434 respectively of the peripheral driving mechanisms 2041 and 2043, which are opposed to one another in the X axis direction, are each made up of a turning pair of one degree of freedom. The other aspects of the configuration of the peripheral driving mechanisms 2041 to 2044 will not be elaborated here.

The center drive mechanism 2005 includes two turnable actuators 2050, two transmission bars 2051, two upper center joints 2052, two lower center joints 2053, two first bearings 2055, and two second rotation axes 2054. The two turnable actuators 2050 are disposed on the fixed plate 2001. The two transmission bars 2051 transmit the driving force of the respective turnable actuators 2050 to the end effector 2003. The two first bearings 2055 are disposed on the movable plate 2002 along the x axis direction.

The two turnable actuators 2050 are disposed on the fixed plate 2001 along, in this embodiment, the x axis direction with the rotation axes of the turnable actuators 2050 orthogonal to a plane direction of the fixed plate 2001. The transmission bars 2051 each have a telescopic structure, which is expandable and contractible, and at the same time a structure that engages with a protrusion and a groove, not shown, to transmit the rotational driving force of the turnable actuators 2050 to the respective second rotation axes 2054. Each of the transmission bars 2051 has its upper end coupled to a needle of the corresponding turnable actuator 2050 through the corresponding upper center joint 2052, which is a turning pair of two degrees of freedom. Each of the transmission bars 2051 has its lower end coupled to the second rotation axes 2054 through the corresponding lower center joint 2053, which is a turning pair of two degrees of freedom. The second rotation axes 2054 are held by the first bearings 2055 in a rotatable manner with one degree of freedom about an axis parallel to the Z axis.

The differential mechanism 2100 includes a pair of opposing bevel gears 2102 and a bevel gear 2103. The pair of bevel gears 2102 are turned into rotation by the rotation of the second rotation axes 2054 through worm gears 2101. The bevel gear 2103 meshes with both the pair of bevel gears 2102. The bevel gear 2103 is coupled to the end effector 2003 by the first rotation axis 2104. When by driving of the turnable actuators 2050 the pair of bevel gears 2102 are turned into rotation in the same direction, the bevel gear 2103 and the end effector 2003 are driven into rotation about an axis parallel to the X axis. In contrast, when the pair of bevel gears 2102 are turned into rotation in different directions, the end effector 2003 is driven into rotation about the first rotation axis 2104. Thus, the differential mechanism 2100 drives the end effector 2003 with two degrees of freedom, that is, one rotational degree of freedom about the first rotation axis 2104 and one rotational degree of freedom about an axis parallel to the X axis.

With such parallel mechanism 2000, by controlling the four turnable actuators 2410 to 2440, the movable plate 2002 can be driven uniquely with four degrees of freedom, that is, three translational degrees of freedom and one rotational degree of freedom about the Y axis. In contrast, the end effector 2003 is driven with two degrees of freedom relative to the movable plate 2002, as described above. Accordingly, by controlling the four turnable actuators 2410 to 2440 and the two turnable actuators 2050, the end effector 2003 can be driven uniquely with six degrees of freedom. Thus, the use of the parallel mechanism 2000 according to this embodiment enables the movable plate 2002 to be driven in a completely parallel manner without generating torsional torque in the longitudinal direction of the parallel linkage, and realizes a parallel mechanism that is driven with six degrees of freedom with both high speed and high accuracy ensured.

Additionally, the use of the worm gears 2101 in the differential mechanism 2100 increases the driving torque for the two rotational degrees of freedom of the end effector 2003. This, as a result, eliminates the need for a reducer for each of the turnable actuators 2050 and reduces the size of the turnable actuators 2050, which leads to a reduction in size of the parallel mechanism 2000.

While in this embodiment the worm gears 2101 are used to transmit the rotation of the second rotation axes 2054 to the bevel gears 2102, it is also possible to use hypoid gears and bevel gears instead of worm gears. Also in this embodiment, the movable plate 2002 is driven with four degrees of freedom including one rotational degree of freedom about the Y axis, and the end effector 2003 is driven with two rotational degrees of freedom about an axis parallel to the X axis. This relationship between the X axis and the Y axis may be applied in reverse. That is, the movable plate 2002 may be driven with four degrees of freedom including one rotational degree of freedom about the X axis, while the end effector 2003 may be driven with two rotational degrees of freedom about an axis parallel to the Y axis. In this case, the two turnable actuators 2050, the two transmission bars 2051, and the two first bearings 2055 of the center drive mechanism 2005 may be disposed along the y axis (Y axis) direction, and the lower joints 2414 and 2434 respectively of the peripheral driving mechanisms 2041 and 2043 each may be made up of a turning pair of two degrees of freedom (for example, a universal joint).

It should be noted that the third embodiment should not be construed in a limiting sense, and various modifications are possible without departing from the technical scope of the present invention. Modifications will be described below.

### (3-1) Case where a turnable, second movable plate is disposed at the movable plate.

While in the third embodiment the differential mechanism 2100 is used to drive the end effector 2003 with two degrees of freedom, this should not be construed in a limiting sense. It is also possible to provide a turnable, second movable plate at the movable plate and to locate the end effector at the second movable plate, thereby driving the end effector with two degrees of freedom.

As shown in FIG. 13, a parallel mechanism 3000 according to this modification includes a fixed plate 3001, four peripheral driving mechanisms 3041 to 3044, a center drive mechanism 3005, a movable plate 3002, and an end effector 3003. The end effector 3003 is disposed below the movable plate 3002 in a rotatable manner about a rotation axis 3054B. The configuration of the peripheral driving mechanisms 3041 to 3044 is basically similar to the configuration of the corresponding ones of the parallel mechanism 2000 described above. Still, in this modification, the lower joints 3414 and 3434 respectively of the peripheral driving mechanisms 3041 and 3043, which are opposed to one another in the X axis direction, are each made up of a turning pair of two degrees of freedom with two pair axes orthogonal to one another (for example, a universal joint). Also, the lower joints 3424 and 3444 respectively of the peripheral driving mechanisms 3042 and 3044, which are opposed to one another in the Y axis direction, are each made up of a turning pair of one degree of freedom.

The center drive mechanism 3005 includes turnable actuators 3050A and 3050B, two transmission bars 3051A and 3051B, two upper center joints 3052A and 3052B, two lower center joints 3053A and 3053B, a single first bearing 3055A, and two rotation axes 3054A and 3054B. The turnable actuators 3050A and 3050B are disposed on the fixed plate 3001. The upper center joints 3052A and 3052B and the lower center joints 3053A and 3053B each are a turning pair of two degrees of freedom. The first bearing 3055A is disposed on the movable plate 3002.

The two turnable actuators 3050A and 3050B are disposed on the fixed plate 3001 along, in this embodiment, the x axis direction with the rotation axes of the turnable actuators 3050A and 3050B orthogonal to a plane direction of the fixed plate 3001. The turnable actuator 3050B is disposed at the center of the fixed plate 3001. The transmission bars 3051A and 3051B are expandable and contractible and capable of transmitting the rotational driving force of the turnable actuators 3050A and 3050B to the rotation axes 3054A and 3054B. Among the rotation axes 3054A and 3054B, the rotation axis 3054A is held by the first bearing 3055A in a rotatable manner with one degree of freedom about an axis parallel to the Z axis, and includes a ball screw 3056 below the first bearing 3055A.

The movable plate 3002 is provided with a second movable plate 3008 below the movable plate 3002 through a coupling board 3006 and a turning pair 3007 of one degree of freedom. On the second movable plate 3008, a slider 3009 is disposed in a movable manner on the second movable plate 3008. The slider 3009 is coupled to the ball screw 3056 through a turning pair 3011 of one degree of freedom. The turning pairs 3007 and 3011 of one degree of freedom are both disposed in a rotatable manner about an axis parallel to the Y axis. Thus, by the rotation of the rotation axis 3054A, the second movable plate 3008 is rotatable about an axis parallel to the Y axis relative to the movable plate 3002. On the second movable plate 3008, a second bearing 3055B is disposed. The second bearing 3055B holds the rotation axis 3054B in a rotatable manner with one degree of freedom about an axis orthogonal to a plane direction of the second movable plate 3008. It is noted that the rotation axis 3054B penetrates through an opening 3010 disposed at a center position of the movable plate 3002. This configuration ensures that the end effector 3003 is driven with two degrees of freedom, that is, one rotational degree of freedom about the rotation axis 3054B and one rotational degree of freedom about an axis parallel to the Y axis.

With such parallel mechanism 3000, by controlling the four turnable actuators 3410 to 3440, the movable plate 3002 can be driven uniquely with four degrees of freedom, that is, three translational degrees of freedom and one rotational degree of freedom about the X axis. In contrast, the end effector 3003 is driven with two degrees of freedom relative to the movable plate 3002, as described above. Accordingly, by controlling the four turnable actuators 3410 to 3440 and the two turnable actuators 3050A and 3050B, the end effector 3003 can be driven uniquely with six degrees of freedom. Additionally, unlike the parallel mechanism 2000 described above, no differential mechanism 2100 with worm gears and bevel gears is provided. This eliminates backlash, which otherwise can occur in the gear mechanism.

In this embodiment, the movable plate 3002 is driven with four degrees of freedom including one rotational degree of freedom about the X axis, and the end effector 3003 is driven with two rotational degrees of freedom including rotation about an axis parallel to the Y axis. This relationship between the X axis and the Y axis may be applied in reverse. That is, the movable plate 3002 may be driven with four degrees of freedom including one rotational degree of freedom about the Y axis, while the end effector 3003 may be driven with two rotational degrees of freedom including rotation about an axis parallel to the X axis. In this case, the two turnable actuators 3050A and 3050B, the transmission bars 3051A and 3051B, and other elements of the center drive mechanism 3005 may be disposed along the y axis (Y axis) direction, and the lower joints 3424 and 3444 respectively of the peripheral driving mechanisms 3042 and 3044 each may be made up of a turning pair of two degrees of freedom (for example, a universal joint). Then, the second movable plate 3008 may be made rotatable relative to the movable plate 3002 about an axis parallel to the X axis.

### (3-2) Case where the transmission bar passes through the upper arm

While in the above-described embodiments the transmission bar(s) is disposed in the inner space defined by the four peripheral driving mechanisms, this should not be construed in a limiting sense. The transmission bar(s) may pass through the interior of the corresponding upper arm(s).

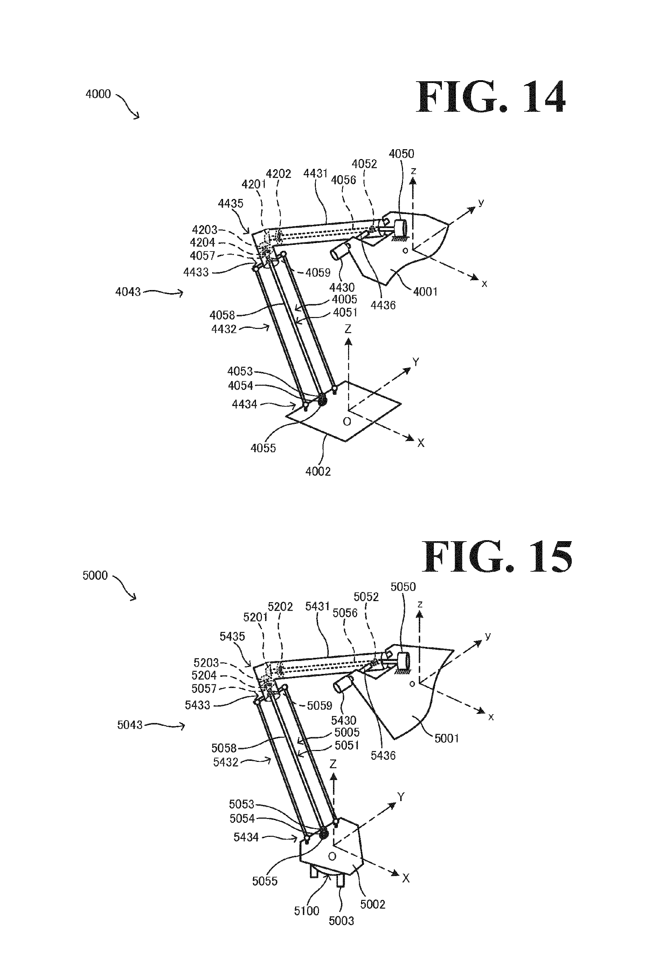

FIG. 14 illustrates a peripheral driving mechanism 4043 selected from four peripheral driving mechanisms 4041 to 4044 of a parallel mechanism 4000 according to this modification. As shown in FIG. 14, the peripheral driving mechanism 4043 includes an upper arm 4431, a lower arm 4432, an upper joint 4433, and a lower joint 4434. The upper joint 4433 couples the upper arm 4431 and the lower arm 4432 to one another. The lower joint 4434 couples the lower arm 4432 and a movable plate 4002 to one another. The upper arm 4431 has a cylindrical hollowed pipe structure with a bent portion 4435 along the length of the upper arm 4431, and is made of a highly rigid material such as metal. The upper arm 4431 has its upper end coupled to a rotor 4436 of a turnable actuator 4430 so as to swing about the axis of the rotor 4436 on the x-z plane. In contrast, the lower arm 4432 is made up of a parallel linkage.

Among two transmission bars 4051 of a center drive mechanism 4005 according to this modification, the transmission bar 4051 on the peripheral driving mechanism 4043 side includes a first bar 4056, a second bar 4057, and a third bar 4058. The first bar 4056 and the second bar 4057 pass through the interior of the upper arm 4431. The third bar 4058 is parallel to the lower arm 4432. The first bar 4056 has its upper end coupled to a needle of a turnable actuator 4050 through a universal joint 4052. The turnable actuator 4050 is disposed on a fixed plate 4001. At the lower end of the first bar 4056, a bevel gear 4201 is disposed. The first bar 4056 is held by a bearing 4202, which is disposed inside the upper arm 4431, in a rotatable manner with one degree of freedom about the cylinder of the upper arm 4431 (the portion from the bent portion 4435 up). The second bar 4057 has its lower end coupled to the third bar 4058 through a universal joint 4059. At the upper end of the second bar 4, a bevel gear 4203 is disposed and meshes with the bevel gear 4201. The second bar 4057 is held by a bearing 4204, which is disposed inside the upper arm 4431, in a rotatable manner with one degree of freedom about the cylinder of the upper arm 4431 (the portion from the bent portion 4435 down). The third bar 4058 has its lower end coupled to a second rotation axis 4054 through a lower center joint 4053, which is a turning pair of two degrees of freedom. The second rotation axis 4054 is held by a first bearing 4055 in a rotatable manner with one degree of freedom about an axis parallel to the Z axis.

It is noted that the universal joint 4052 has its center point positioned on the rotation axis of the rotor 4436 of the turnable actuator 4430, while the universal joint 4059 has its center point positioned on the rotation axes of the upper link of the parallel linkage of the lower arm 4432. This structure ensures that the transmission bar 4051 passes through the interior of the upper arm 4431 and transmits the driving force of the turnable actuator 4050 to the second rotation axis 4054 through the bevel gears 4201 and 4203 disposed in the bent portion 4435.

The other aspects of the configuration of the parallel mechanism 4000, which are not shown, are similar to those of the parallel mechanism 2000 described above. Specifically, in the parallel mechanism 4000 according to this modification, the configuration shown in FIG. 14 replaces the peripheral driving mechanism 2043 of the parallel mechanism 2000 described above, the turnable actuator 2050, the transmission bar 2051, the upper center joint 2052, and the lower center joint 2053 that are on the side corresponding to the peripheral driving mechanism 2043. Thus, by the rotation of the second rotation axis 4054, the bevel gear 2102 is turned into rotation through the worm gear 2101 of the differential mechanism 2100 shown in FIG. 12.

Such parallel mechanism 4000 ensures similar advantageous effects to those in the third embodiment described above. Additionally, since the transmission bar 4051 is accommodated inside the upper arm 4431, the external appearance improves. Further, since the inner space defined by the four peripheral driving mechanisms 4041 to 4044 is left empty, this space can serve some other purpose.

While in this embodiment a bevel gear is used to transmit the rotation of the first bar 4056 to the second bar 4057, it is also possible to use a worm gear instead of the bevel gear. In this case, the driving torque of the second rotation axis 4054 increases. This eliminates the need for a reducer for the turnable actuator 4050 and reduces the size of the turnable actuator 4050, which leads to a reduction in size of the parallel mechanism 4000. Also in this embodiment, the configuration shown in FIG. 14 replaces the peripheral driving mechanism 2043 of the parallel mechanism 2000 described above. It is also possible to replace both the peripheral driving mechanisms 2041 and 2043, which are opposed to one another along the X axis, with the configuration shown in FIG. 14.

### <Fourth embodiment>

Next, a fourth embodiment will be described by referring to the accompanying drawings. This embodiment is directed to a parallel mechanism 5000 driven with six degrees of freedom (three degrees of freedom for driving of the movable plate and three degrees of freedom for driving of the end effector).

FIG. 15 illustrates a peripheral driving mechanism 5043 selected from three peripheral driving mechanisms 5041 to 5043 of the parallel mechanism 5000 according to this modification. As shown in FIG. 15, the parallel mechanism 5000 according to this embodiment includes a fixed plate 5001, the three peripheral driving mechanisms 5041 to 5043, a center drive mechanism 5005, a movable plate 5002, a wrist mechanism 5100, and an end effector 5003. The three peripheral driving mechanisms 5041 to 5043 are disposed at equal intervals at three positions on the circumference of the fixed plate 5001. In this embodiment as well, the following description will refer to absolute coordinates (xyzo) and relative coordinates (XYZO). The absolute coordinates (xyzo) have an xoy plane that has an origin o at the center of the fixed plate 5001 and that is parallel to the fixed plate 5001. The relative coordinates (XYZO) have an XOY plane that has an origin O at the center of the movable plate 5002 and that is parallel to the movable plate 5002.

The peripheral driving mechanisms 5041 to 5043 are disposed at equal intervals at three positions on the circumference of each of the fixed plate 5001 and the movable plate 5002, and each have a similar configuration to the configuration of the peripheral driving mechanism 4043 of the parallel mechanism 4000 described above. In this embodiment, the peripheral driving mechanisms 5041 to 5043 respectively include lower joints 5414 to 5434, each of which is made up of a turning pair of one degree of freedom. The other aspects of the configuration of the peripheral driving mechanisms 5041 to 5043 will not be elaborated here.

The center drive mechanism 5005 includes three turnable actuators 5050, three transmission bars 5051, three upper center joints 5052, three lower center joints 5053, three first bearings 5055, and three second rotation axes 5054. The three turnable actuators 5050 are disposed on the fixed plate 5001. The three transmission bars 5051 transmit the driving force of the turnable actuators 5050 to the end effector 5003. The three first bearings 5055 are disposed at equal intervals at three positions on the circumference of the movable plate 5002.

The transmission bars 5051 of the center drive mechanism 5005 each have a similar structure to the structure of the transmission bar 4051 of the parallel mechanism 4000 described above. One of the transmission bars 5051 passes through the interior of an upper arm 5431 of the peripheral driving mechanism 5043, and thus is capable of transmitting the driving force of the turnable actuator 5050 to the second rotation axis 5054 through the bevel gears 5201 and 5203 disposed in a bent portion 5435. Likewise, for the other two peripheral driving mechanisms 5041 and 5042, the transmission bars 5051 respectively pass through the interior of upper arms 5411 and 5421, which is not shown.

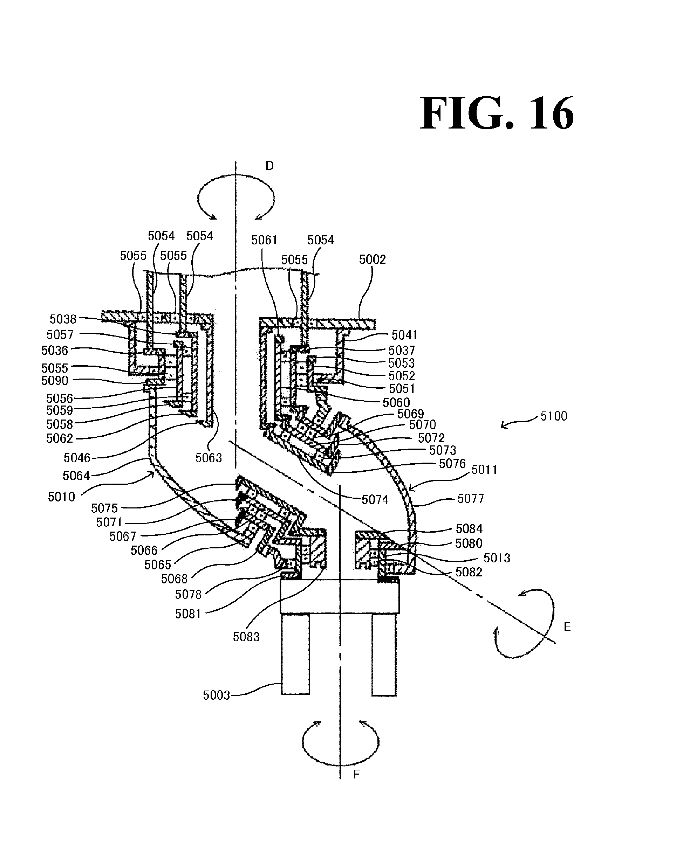

This configuration ensures that by controlling the three turnable actuators 5410 to 5430, the movable plate 5002 can be driven uniquely with three translational degrees of freedom. In contrast, the end effector 5003 is driven with three degrees of freedom relative to the movable plate 5002 by the wrist mechanism 5100. A structure of the wrist mechanism 5100 will be described in detail by referring to FIG. 16.

As shown in FIG. 16, the wrist mechanism 5100 includes a first wrist member 5010, a second wrist member 5011, and a jig support 5013. The jig support 5013 turns the end effector 5003 into rotation about the F axis. The wrist members 5010 and 5011 rotate relative to one another so as to turn the wrist mechanism 5100 into rotation about the D axis and bending about the E axis. The first wrist member 5010, the second wrist member 5011, and the jig support 5013 are driven by the three turnable actuators 5050. The rotational driving force of each of the three turnable actuators 5050 is transmitted to the first wrist member 5010, the second wrist member 5011, and the jig support 5013 through the three transmission bars 5051 and the three second rotation axes 5054 of the respective peripheral driving mechanisms 5041 to 5043.

As described above, the three second rotation axes 5054 are held by the respective first bearings 5055 disposed on the movable plate 5002. At a lower end of each of the second rotation axes 5054, gears 5036 to 5038 are disposed. At the lower surface of the movable plate 5002, a support member 5041 is disposed. In the support member 5041, a cylindrical shaft 5052 is supported through a bearing 5051 in a rotatable manner about the D axis. At an upper end of the cylindrical shaft 5052, a gear 5053 is disposed and meshes with the gear 5036 of each of the second rotation axes 5054. At a lower end of the cylindrical shaft 5052, a flange 5090 is disposed. Further, in the cylindrical shaft 5052, a bearing 5055 is fitted. On the inner circumference of the bearing 5055, a cylindrical shaft 5056 is supported in a rotatable manner about the D axis. At an upper end of the cylindrical shaft 5056, a gear 5057 is disposed. The gear 5057 meshes with the gear 5037 each of the second rotation axes 5054.

At a lower end of the cylindrical shaft 5056, a bevel gear 5058 is disposed. In the cylindrical shaft 5056, a bearing 5059 is fitted. On the inner circumference of the bearing 5059, a cylindrical shaft 5060 is supported in a rotatable manner about the D axis. At an upper end of the cylindrical shaft 5060, a gear 5061 is disposed. The gear 5061 meshes with the gear 5038 of the second rotation axes 5054. At a lower end of the cylindrical shaft 5060, a bevel gear 5062 is disposed. Further, in the cylindrical shaft 5060, a hollow member 5063 passes through. The hollow member 5063 has its upper end secured to the lower surface of the movable plate 5002. At a lower end of the hollow member 5063, a bevel gear 5046 is disposed.

To the flange 5090 of the cylindrical shaft 5052, a case 5064 of the first wrist member 5010 is mounted. The case 5064 supports a cylindrical shaft 5066 in a rotatable manner about the E axis through a bearing 5065 disposed in the case 5064. At an upper end of the cylindrical shaft 5066, a bevel gear 5067 is disposed and meshes with the bevel gear 5058. At a lower end of the cylindrical shaft 5066, a flange 5068 is disposed. Further, in the cylindrical shaft 5066, a bearing 5069 is fitted. On the circumference of the bearing 5069, a cylindrical shaft 5070 is supported in a rotatable manner about the E axis. At an upper end of the cylindrical shaft 5070, a bevel gear 5071 is disposed and meshes with the bevel gear 5062. Further, at a lower end of the cylindrical shaft 5070, a bevel gear 5072 is disposed. In the cylindrical shaft 5070, a bearing 5073 is fitted. On the circumference of the bearing 5073, a hollow member 5074 is supported in a rotatable manner about the E axis.

At an upper end of the hollow member 5074, a bevel gear 5075 is disposed and meshes with the bevel gear 5046 of the hollow member 5063. Further, at a lower end of the hollow member 5074, a bevel gear 5076 is disposed. To the flange 5068 of the cylindrical shaft 5066, a case 5077 of the second wrist member 5011 is mounted. The case 5077 supports the jig support 5013 in a rotatable manner about the F axis through a bearing 5078 disposed in the case 5077. Further, at an upper end of the jig support 5013, a bevel gear 5080 is disposed and meshes with the bevel gear 5072. At a lower end of the jig support 5013, a flange 5081 is disposed. To the flange 5081, the end effector 5003 is mounted.

In the jig support 5013, a bearing 5082 is fitted. On the circumference of the bearing 5082, a hollow member 5083 is supported in a rotatable manner about the F axis. At an upper end of the hollow member 5083, a bevel gear 5084 is disposed and meshes with the bevel gear 5076. With this configuration, the wrist mechanism 5100 drives the end effector 5003 with three degrees of freedom including one rotational degree of freedom about the D axis, one rotational degree of freedom about the E axis, and one rotational degree of freedom about the F axis.

With such parallel mechanism 5000, by controlling the three turnable actuators 5410 to 5430, the movable plate 5002 can be driven uniquely with three translational degrees of freedom. In contrast, the end effector 5003 is driven with three degrees of freedom relative to the movable plate 5002, as described above. Accordingly, by controlling the three turnable actuators 5410 to 5430 and the three turnable actuators 5050, the end effector 5003 can be driven uniquely with six degrees of freedom. Thus, the use of the parallel mechanism 5000 according to this embodiment enables the movable plate 5002 to be driven in a completely parallel manner without generating torsional torque in the longitudinal direction of the parallel linkage, and realizes a parallel mechanism that is driven with six degrees of freedom with both high speed and high accuracy ensured.

Otherwise, the above-described embodiments and modifications may be combined in any manner deemed suitable.

Obviously, numerous modifications and variations of the present invention are possible in light of the above teachings. It is therefore to be understood that within the scope of the appended claims, the invention may be practiced otherwise than as specifically described herein.

### [Description of the Reference Numeral]

| | |
|---|---|
| 1 | Fixed plate |
| 2 | Movable plate |
| 31, 32, 33, 34 | Turnable actuator |
| 41, 42, 43, 44 | Peripheral driving mechanism |
| 100, 100A to 100D | Parallel mechanism |
| 411, 421, 431, 441 | Upper arm |
| 412, 422, 432, 442 | Lower arm |
| 413, 423, 433, 443 | Upper joint |
| 414, 424, 434, 444 | Lower joint |
| 51 | Center rod (bar) |
| 52 | Upper center joint (ball joint, universal joint) |
| 53 | Lower center joint (ball joint, universal joint) |
| 1000, 1000A to 1000E | Parallel mechanism |
| 1001 | Fixed plate |
| 1002 | Movable plate |
| 1003 | End effector |
| 1005 | Center drive mechanism |
| 1041, 1042, 1043, 1044 | Peripheral driving mechanism |
| 1050 | Turnable actuator |
| 1051 | Linear motion actuator |
| 1052 | Upper center joint |
| 1053 | Lower center joint |
| 1054 | Bearing |
| 1410, 1420, 1430, 1440 | Turnable actuator |
| 1411, 1421, 1431, 1441 | Upper arm |
| 1412, 1422, 1432, 1442 | Lower arm |
| 1413, 1423, 1433, 1443 | Upper joint |
| 1414, 1424, 1434, 1444 | Lower joint |
| 2000 | Parallel mechanism |
| 2001 | Fixed plate |
| 2002 | Movable plate |
| 2003 | End effector |
| 2005 | Center drive mechanism |
| 2041, 2042, 2043, 2044 | Peripheral driving mechanism |
| 2050 | Turnable actuator |
| 2052 | Upper center joint |
| 2053 | Lower center joint |
| 2410, 2420, 2430, 2440 | Turnable actuator |
| 2411, 2421, 2431, 2441 | Upper arm |
| 2412, 2422, 2432, 2442 | Lower arm |
| 2413, 2423, 2433, 2443 | Upper joint |
| 2414, 2424, 2434, 2444 | Lower joint |
| 3000 | Parallel mechanism |
| 3001 | Fixed plate |
| 3002 | Movable plate |
| 3003 | End effector |
| 3005 | Center drive mechanism |
| 3041, 3042, 3043, 3044 | Peripheral driving mechanism |
| 3050A, 3050B | Turnable actuator |
| 3052A, 3052B | Upper center joint |
| 3053A, 3053B | Lower center joint |
| 3410, 3420, 3430, 3440 | Turnable actuator |
| 3411, 3421, 3431, 3441 | Upper arm |
| 3412, 3422, 3432, 3442 | Lower arm |
| 3413, 3423, 3433, 3443 | Upper joint |
| 3414, 3424, 3434, 3444 | Lower joint |
| 4000 | Parallel mechanism |
| 4001 | Fixed plate |
| 4002 | Movable plate |
| 4005 | Center drive mechanism |
| 4041, 4042, 4043, 4044 | Peripheral driving mechanism |
| 4050 | Turnable actuator |
| 4052 | Upper center joint |
| 4053 | Lower center joint |
| 4410, 4420, 4430, 4440 | Turnable actuator |
| 4411, 4421, 4431, 4441 | Upper arm |
| 4412, 4422, 4432, 4442 | Lower arm |
| 4413, 4423, 4433, 4443 | Upper joint |
| 4414, 4424, 4434, 4444 | Lower joint |

## Claims

1. A parallel mechanism, **characterized by**:
a fixed plate comprising four directions;
four turnable actuators each comprising a rotor and disposed in the respective four directions of the fixed plate with pivot axes of two adjacent turnable actuators among the four turnable actuators being orthogonal to one another and with pivot axes of two opposing turnable actuators among the four turnable actuators being parallel to one another;
four peripheral driving mechanisms each comprising:
an upper arm comprising a bar integral with the rotor of a turnable actuator among the four turnable actuators corresponding to the upper arm;
a lower arm;
an upper joint coupling the upper arm and the lower arm to one another; and
a lower joint coupling the lower arm and a movable plate to one another; and
the movable plate comprising a plane direction and being driven by the four turnable actuators through the four peripheral driving mechanisms with at least four degrees of freedom comprising one rotational degree of freedom along the plane direction of the movable plate.

2. The parallel mechanism according to claim 1, wherein the movable plate is driven with four degrees of freedom comprising at least one of one rotational degree of freedom about an X axis along the plane direction of the movable plate and one rotational degree of freedom about a Y axis orthogonal to the X axis along the plane direction of the movable plate.

3. The parallel mechanism according to claim 2,
wherein the lower arm comprises a parallel linkage,
wherein the upper joint comprises a turning pair comprising a pair axis that is parallel to a rotation axis of a turnable actuator among the four turnable actuators corresponding to the upper joint and that is parallel to links of the parallel linkage coupled to the upper joint,
wherein two opposing lower joints among four lower joints of the four peripheral driving mechanisms each comprise a turning pair comprising a pair axis parallel to the links of the parallel linkage coupled to the corresponding one of the two opposing lower joints, and
wherein other two lower joints among the four lower joints of the four peripheral driving mechanisms each comprise a turning pair of two degrees of freedom, the turning pair of the other two lower joints comprising a first pair axis on a side of the parallel linkage coupled to the corresponding one of the other two lower joints and a second pair axis that is on a side of the movable plate and that is orthogonal to the first pair axis, the first pair axis being parallel to the links of the parallel linkage, the second pair axis being aligned with a line parallel to a rotation axis of an adjacent turnable actuator among the four turnable actuators.

4. The parallel mechanism according to claim 3, wherein at least one lower joint among the other two lower joints comprises a ball joint.

5. The parallel mechanism according to claim 2,
wherein two opposing peripheral driving mechanisms among the four peripheral driving mechanisms each comprise a lower arm comprising a parallel linkage, the upper joint and the lower joint of each of the two opposing peripheral driving mechanisms each comprising a turning pair comprising a pair axis that is parallel to a rotation axis of a turnable actuator among the four turnable actuators corresponding to the upper joint and the lower joint and that is parallel to links of the parallel linkage coupled to the upper joint and the lower joint, and
wherein other two peripheral driving mechanisms among the four peripheral driving mechanisms each comprise a lower arm comprising a bar, the upper joint and the lower joint of each of the other two peripheral driving mechanisms comprising turning pairs of equal to or more than two degrees of freedom, at least one turning pair among the turning pairs comprising a ball joint.

6. The parallel mechanism according to claim 1, wherein the movable plate is driven with four degrees of freedom comprising one rotational degree of freedom about an X axis along the plane direction of the movable plate and one rotational degree of freedom about a Y axis orthogonal to the X axis along the plane direction of the movable plate.

7. The parallel mechanism according to claim 6,
wherein a center of the fixed plate and a center of the movable plate are coupled to one another by two ball joints and a bar,
wherein the lower arm comprises a parallel linkage,
wherein the upper joint comprises a turning pair comprising a pair axis that is parallel to a rotation axis of a turnable actuator among the four turnable actuators corresponding to the upper joint and that is parallel to links of the parallel linkage coupled to the upper joint,
wherein the lower joint comprises a turning pair of two degrees of freedom, the turning pair of the lower joint comprising a first pair axis on a side of the parallel linkage coupled to the lower joint and a second pair axis that is on a side of the movable plate and that is orthogonal to the first pair axis,
wherein the first pair axis is parallel to the links of the parallel linkage, and
wherein the second pair axis of each of two opposing lower joints among lower joints of the four peripheral driving mechanisms is aligned with a line parallel to a rotation axis of an adjacent turnable actuator among the four turnable actuators.

8. The parallel mechanism according to claim 7, wherein equal to or less than three lower joints among the lower joints comprise respective ball joints.

9. The parallel mechanism according to claim 6,
wherein a center of the fixed plate and a center of the movable plate are coupled to one another by two ball joints and a bar,
wherein two opposing peripheral driving mechanisms among the four peripheral driving mechanisms each comprise a lower arm comprising a parallel linkage, the upper joint of each of the two opposing peripheral driving mechanisms comprising a turning pair comprising a pair axis that is parallel to a rotation axis of a turnable actuator among the four turnable actuators corresponding to the upper joint and that is parallel to links of the parallel linkage coupled to the upper joint, the lower joint of each of the two opposing peripheral driving mechanisms comprising a turning pair of two degrees of freedom, the turning pair of the lower joint comprising a first pair axis on a side of the parallel linkage coupled to the lower joint and a second pair axis that is on a side of the movable plate and that is orthogonal to the first pair axis, the first pair axis being parallel to the links of the parallel linkage coupled to the lower joint, the second pair axis of each of two lower joints of the two opposing peripheral driving mechanisms being aligned with a line parallel to a rotation axis of an adjacent turnable actuator among the four turnable actuators, and
wherein other two peripheral driving mechanisms among the four peripheral driving mechanisms each comprise a lower arm comprising a bar, the upper joint and the lower joint of each of the other two peripheral driving mechanisms comprising turning pairs of equal to or more than two degrees of freedom, at least one of the turning pairs comprising a ball joint.

10. The parallel mechanism according to claim 6,
wherein a center of the fixed plate and a center of the movable plate are coupled to one another by two universal joints and a bar,
wherein the lower arm comprises a bar, and
wherein the upper joint and the lower joint of each of the four peripheral driving mechanisms comprise turning pairs of equal to or more than two degrees of freedom, at least one of the turning pairs comprising a ball joint.

11. The parallel mechanism according to claim 1, wherein the movable plate is driven with five degrees of freedom comprising one rotational degree of freedom about an X axis along the plane direction of the movable plate and one rotational degree of freedom about a Y axis orthogonal to the X axis along the plane direction of the movable plate.

12. The parallel mechanism according to claim 11, further comprising:
an end effector disposed at the movable plate; and
a center drive mechanism comprising:
a turnable actuator disposed at a center of the fixed plate and comprising a needle;
a linear motion actuator;
an upper center joint coupling an upper end of the linear motion actuator to the needle of the turnable actuator;
a lower center joint coupling a lower end of the linear motion actuator to the end effector; and
a bearing disposed at a center of the movable plate and configured to hold the end effector so as to permit the end effector to rotate with one degree of freedom about a Z axis orthogonal to the X axis and the Y axis,
wherein the end effector is driven with six degrees of freedom by driving of the four turnable actuators, the turnable actuator, and the linear motion actuator.

13. The parallel mechanism according to claim 12,
wherein the lower arm comprises a parallel linkage,
wherein the upper joint comprises a turning pair comprising a pair axis that is parallel to a rotation axis of a turnable actuator among the four turnable actuators corresponding to the upper joint and that is parallel to links of the parallel linkage coupled to the upper joint,
wherein the lower joint comprises a turning pair of two degrees of freedom, the turning pair of the lower joint comprising a first pair axis on a side of the parallel linkage coupled to the lower joint and a second pair axis that is on a side of the movable plate and that is orthogonal to the first pair axis,
wherein the first pair axis is parallel to the links of the parallel linkage, and
wherein the second pair axis of each of two opposing lower joints among lower joints of the four peripheral driving mechanisms is aligned with a line parallel to a rotation axis of an adjacent turnable actuator among the four turnable actuators, and
wherein the upper center joint and the lower center joint each comprise a turning pair of two degrees of freedom.

14. The parallel mechanism according to claim 12,
wherein two opposing peripheral driving mechanisms among the four peripheral driving mechanisms each comprise a lower arm comprising a parallel linkage, the upper joint of each of the two opposing peripheral driving mechanisms comprising a turning pair comprising a pair axis that is parallel to a rotation axis of a turnable actuator among the four turnable actuators corresponding to the upper joint and that is parallel to links of the parallel linkage coupled to the upper joint, the lower joint of each of the two opposing peripheral driving mechanisms comprising a turning pair of two degrees of freedom, the turning pair of the lower joint comprising a first pair axis on a side of the parallel linkage coupled to the lower joint and a second pair axis that is on a side of the movable plate and that is orthogonal to the first pair axis, the first pair axis being parallel to the links of the parallel linkage, the second pair axis of each of lower joints of the two opposing peripheral driving mechanisms being aligned with a line parallel to a rotation axis of an adjacent turnable actuator, and
wherein other two peripheral driving mechanisms among the four peripheral driving mechanisms each comprise a lower arm comprising a bar, the upper joint and the lower joint of each of the other two peripheral driving mechanisms comprising turning pairs of equal to or more than two degrees of freedom, at least one of the turning pairs comprising a ball joint, the upper center joint and the lower center joint each comprising a turning pair of two degrees of freedom.

15. The parallel mechanism according to claim 12,
wherein the lower arm comprises a bar,
wherein the upper joint and the lower joint of each of the four peripheral driving mechanisms comprise turning pairs of equal to or more than two degrees of freedom, at least one of the turning pairs comprising a ball joint, and
wherein the upper center joint and the lower center joint each comprise a turning pair of two degrees of freedom.

16. The parallel mechanism according to claim 11, further comprising:
an end effector disposed at the movable plate; and
a center drive mechanism comprising:
a linear motion actuator;
an upper center joint coupling an upper end of the linear motion actuator to a center of the fixed plate;
a lower center joint coupling a lower end of the linear motion actuator to a center of the movable plate; and
a turnable actuator comprising a stator disposed at a lower surface of the movable plate and comprising a needle coupled to the end effector,
wherein the end effector is driven with six degrees of freedom by driving of the four turnable actuators, the turnable actuator, and the linear motion actuator.

17. The parallel mechanism according to claim 16,
wherein the lower arm comprises a parallel linkage,
wherein the upper joint comprises a turning pair comprising a pair axis that is parallel to a rotation axis of a turnable actuator among the four turnable actuators corresponding to the upper joint and that is parallel to links of the parallel linkage coupled to the upper joint,
wherein the lower joint comprises a turning pair of two degrees of freedom, the turning pair of the lower joint comprising a first pair axis on a side of the parallel linkage coupled to the lower joint and a second pair axis that is on a side of the movable plate and that is orthogonal to the first pair axis,
wherein the first pair axis is parallel to the links of the parallel linkage,
wherein the second pair axis of each of two opposing lower joints among lower joints of the four peripheral driving mechanisms is aligned with a line parallel to a rotation axis of an adjacent turnable actuator among the four turnable actuators, and
wherein the upper center joint and the lower center joint comprise turning pairs of two degrees of freedom, at least one of the turning pairs comprising a ball joint.

18. The parallel mechanism according to claim 16,
wherein two opposing peripheral driving mechanisms among the four peripheral driving mechanisms each comprise a lower arm comprising a parallel linkage, the upper joint of each of the two opposing peripheral driving mechanisms comprising a turning pair comprising a pair axis that is parallel to a rotation axis of a turnable actuator among the four turnable actuators corresponding to the upper joint and that is parallel to links of the parallel linkage coupled to the upper joint, the lower joint of each of the two opposing peripheral driving mechanisms comprising a turning pair of two degrees of freedom, the turning pair of the lower joint comprising a first pair axis on a side of the parallel linkage coupled to the lower joint and a second pair axis that is on a side of the movable plate and that is orthogonal to the first pair axis, the first pair axis being parallel to the links of the parallel linkage, the second pair axis of each of lower joints of the two opposing peripheral driving mechanisms being aligned with a line parallel to a rotation axis of an adjacent turnable actuator, and
wherein other two peripheral driving mechanisms among the four peripheral driving mechanisms each comprise a lower arm comprising a bar, the upper joint and the lower joint of each of the other two peripheral driving mechanisms comprising turning pairs of equal to or more than two degrees of freedom, at least one of the turning pairs comprising a ball joint, the upper center joint and the lower center joint comprising turning pairs of equal to or more than two degrees of freedom, at least one of the turning pairs of the upper center joint and the lower center joint comprising a ball joint.

19. The parallel mechanism according to claim 16,
wherein the lower arm comprises a bar,
wherein the upper joint and the lower joint of each of the four peripheral driving mechanisms comprise turning pairs of equal to or more than two degrees of freedom, at least one of the turning pairs comprising a ball joint, and
wherein the upper center joint and the lower center joint each comprise a turning pair of two degrees of freedom.
